Europäisches Patentamt

European Patent Office

Office européen des brevets

(19)

(11) EP 1 298 466 A1

(12) EUROPEAN PATENT APPLICATION

(43) Date of publication:
02.04.2003 Bulletin 2003/14

(51) Int Cl.$^7$: G02B 6/34, H04B 10/18

(21) Application number: 01308203.7

(22) Date of filing: 26.09.2001

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Lee, Yak W.A., c/o Electronic Engineering Birmingham B4 7ET (GB)**<br>• **Mezentsev, V.K., c/o Electronic Engineering Birmingham, B4 7ET (GB)**<br>• **Khrushchev, Igor,Y., c/o Electronic Engineering Birmingham, B4 7ET (GB)**<br>• **Bennion, Ian, c/o Electronic Engineering Birmingham, B4 7ET (GB)** |
| (71) Applicant: **Aston Photonic Technologies Ltd. Birmingham B7 4BB (GB)** | |
| (72) Inventors:<br>• **Giannone, Domenico,**<br>**c/o Electronic Engineering**<br>**Birmingham B4 7ET (GB)** | (74) Representative: **Finnie, Peter John**<br>**Gill Jennings & Every,**<br>**Broadgate House,**<br>**7 Eldon Street**<br>**London EC2M 7LH (GB)** |

(54) **Compensation of optical dispersion**

(57) A dispersion compensation apparatus (10) includes a chirped fibre Bragg grating (CFBG) (12) coupled to a mechanical support (16) within a bending apparatus (14). The bending apparatus (14) is operable to bend the mechanical support (16) and hence the grating (12). Bending the grating (12) includes an axially non-uniform change in the periodicity, and thus the group delay characteristic, of the grating. The group delay characteristic of an initially linearly CFBG can thereby be made nonlinear. The grating (12) may be used to simultaneously compensate for chromatic dispersion and dispersion slope, and can therefore be used to recompress optical pulses.

Fig 1

**Description**

**Field of the Invention**

The present invention relates to dispersion compensation apparatus and to a method of controlling the amount of dispersion compensation applied to an optical signal.

**Background to the Invention**

The most advanced generation of high bit-rate, wavelength division multiplexed optical communications systems require components for providing compensation for chromatic dispersion acquired by optical pulses during transmission along the optical fibres of the system. Such communication systems often also require components operable to compensate for higher order dispersion, such as dispersion slope, acquired by the optical pulses. The operation of these communication systems therefore depends upon the precise design of dispersion compensation components. This is mostly due to the fact that as the bit-rate increases the effect of higher order dispersion becomes more critical. Optical waveguide gratings, such as fibre Bragg Gratings (FBGs), are perhaps the most promising technology for providing such dispersion compensation.

Linearly chirped FBGs have been used to compensate for chromatic dispersion when the amount of such dispersion present in an optical link is fixed. A chirped fibre Bragg grating has a non-uniform period along its length. The chirp may be linear, i.e. the period increases or decreases linearly with the length of the grating, or may be non-linear (quadratic or cubic for instance). A chirped fibre Bragg grating therefore reflects different optical wavelengths from different sections of the grating, and, as a result, a chirped grating is often described as having a short wavelength end and a long wavelength end.

For example, shorter wavelength light entering a chirped grating at its long wavelength end will propagate along the grating almost to the opposite, short wavelength, end before being reflected, whilst longer wavelength light will be reflected closer to the long wavelength end. Accordingly, shorter wavelengths are delayed in relation to longer wavelengths. Therefore, an optical pulse which has been dispersed such that the shorter wavelengths within the pulse arrive at such a chirped grating before the longer wavelengths, will be restored to its original pulse shape on reflection by the grating, provided that the grating dispersion equals the inverted chirp of the optical pulse.

For a number of reasons, the dispersion accumulated by optical pulses within a given optical channel may vary over time. In dispersion managed systems it is desirable to perform some form of dynamic dispersion compensation at the end of the optical fibre link (post-compensation) to provide compensation against small dispersion variations or changes in channel signal power levels.

Known methods of realising dynamic dispersion compensation include using tuneable dispersion FBGs. These methods typically rely on the application of a gradient stretcher (as strain or temperature) to a uniform FBG, or alternatively on the application of a linear stretcher to a linearly chirped FBG.

**Summary of the Invention**

According to a first aspect of the present invention, a dispersion compensation apparatus comprises:

a chirped optical waveguide grating; and,
means operable to induce an axially non-uniform change in the periodicity of at least part of the grating, to thereby modify one ore more dispersion characteristics of the grating.

The chirped optical waveguide grating is preferably a chirped fibre grating, and is most preferably a chirped fibre Bragg grating. The chirped optical waveguide grating may alternatively be a chirped planar waveguide grating. The chirped optical waveguide grating may be linearly chirped or non-linearly chirped.

The means operable to induce an axially non-uniform change in the periodicity of at least part of the grating is desirably operable to simultaneously modify the chromatic dispersion characteristic and one or more higher order dispersion characteristics of the grating, such as the dispersion slope characteristic.

Preferably, the means operable to induce an axially non-uniform change in the periodicity of at least part of the grating comprises apparatus for applying a non-uniform axial force to at least part of the grating. The non-uniform axial force desirably comprises a combination of bending forces and strain or compression.

The apparatus is preferably operable to mechanically alter the configuration of the grating. The apparatus preferably comprises bending apparatus operable to bend the grating by applying a load at one or more points. The bending apparatus is desirably operable to vary the magnitude of the non-uniform axial force applied to the grating, the dispersion compensation apparatus thereby being tuneable. The bending apparatus is preferably operable to alter the radius of curvature of the grating. The radius of curvature of the grating may be a function of axial distance along the length of the grating.

The bending apparatus desirably comprises a mechanical support to which the grating is coupled and a bending rig to which the mechanical support is coupled, the bending rig being operable to bend the mechanical support, thereby bending the grating. The thickness of the mechanical support may vary across the mechanical support. Alternatively, or additionally, the density and/or composition of the mechanical support may vary across the mechanical support. The mechanical support may comprise a metal bar, such as a spring steel bar. The position of the mechanical support and grating within the bending rig may be varied to further alter the radius of curvature which may be applied to the mechanical support and hence the grating.

The bending rig desirably comprises a multipoint bending rig, the mechanical support being coupled to the multipoint bending rig at a plurality of points such that a load may be applied to the mechanical support at a plurality of points. The bending rig may alternatively comprise a single point bending rig, the mechanical support being fixed at one end, to form a cantilevered beam, and a load being applied at a single point towards the other end.

According to a second aspect of the present invention there is provided a method of controlling the amount of dispersion compensation applied to an optical signal, the method comprising coupling an optical signal to be dispersion compensated to dispersion compensation apparatus according to the first aspect of the present invention.

The method may be used to simultaneously provide compensation for chromatic dispersion and one or more higher order dispersions, such as dispersion slope.

**Brief Description of the Drawings**

Examples of the present invention will now be described in detail with reference to the accompanying drawings, in which:

Figure 1 is a diagrammatic side view of a dispersion compensation apparatus according to the present invention;

Figure 2 is a diagrammatic representation of the mechanical support of the apparatus of Figure 1, with an optical fibre grating coupled thereto;

Figure 3 is a diagrammatic representation of the bending apparatus of the apparatus of Figure1;

Figure 4 shows the reflection spectrum and time delay curve of a chirped fibre Bragg grating suitable for use with the apparatus of Figure 1;

Figure 5 is a diagrammatic representation of a section of a metal beam suitable for use as the mechanical support in the apparatus of Figure 1;

Figure 6 shows the metal beam section of Figure 5 when bent;

Figure 7 shows experimental measurements of the group delay of the fibre Bragg grating as a function of wavelength for increasing applied non-uniform axial strain;

Figure 8 shows experimental measurements of the chromatic dispersion characteristic and dispersion slope characteristic of the fibre Bragg grating as a function of applied non-uniform axial strain;

Figure 9 illustrates the amount of chromatic dispersion that the fibre Bragg grating can compensate over the wavelength range of the grating;

Figure 10 is a schematic representation an experimental setup used to test the ability of the fibre Bragg grating to recompress an optical pulse under different conditions of applied non-uniform axial strain;

Figure 11 illustrates how the dispersion compensation apparatus of Figures 1 to 3, within the experimental setup of Figure 10, compensates for different amounts of dispersion on an optical pulse under three different applied non-uniform axial strain conditions;

Figure 12 shows the original pulse at the output of the laser in Figure 10 and the optimum pulse after recompression by the dispersion compensation apparatus of Figures 1 to 3;

Figure 13 shows the experimental measurement of the time delay ripples on the group delay curve of the fibre Bragg grating within the wavelength range 1549nm to 1551nm; and,

Figure 14 is a diagrammatic side view of part of an alternative dispersion compensation apparatus according to the present invention.

**Detailed Description**

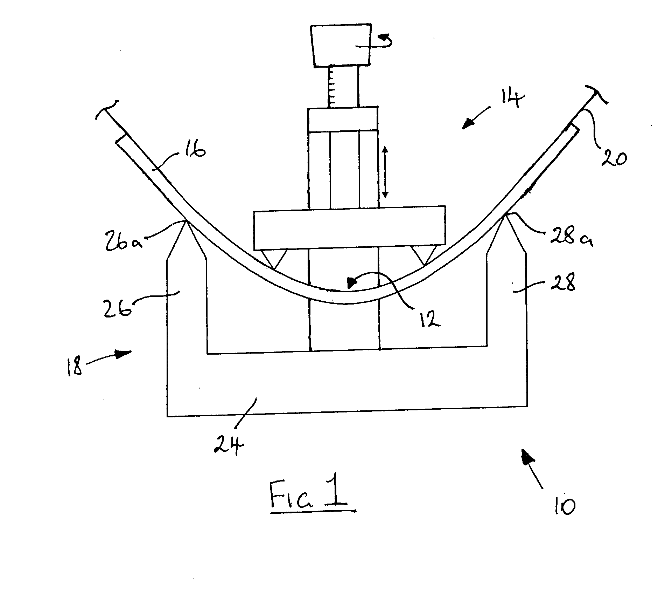

Referring to Figures 1 to 3 and 14, a dispersion compensation apparatus 10, 90 according to the present invention comprises a chirped optical waveguide grating, in the form of a linearly chirped fibre Bragg grating (FBG) 12 in this example, formed in a section of optical fibre 20, and bending apparatus 14 operable to induce an axially non-uniform change in the periodicity of at least part of the grating, to thereby modify the dispersion characteristics of the grating. In the described examples the apparatus 10, 90 is operable to compensate for both chromatic dispersion and dispersion slope.

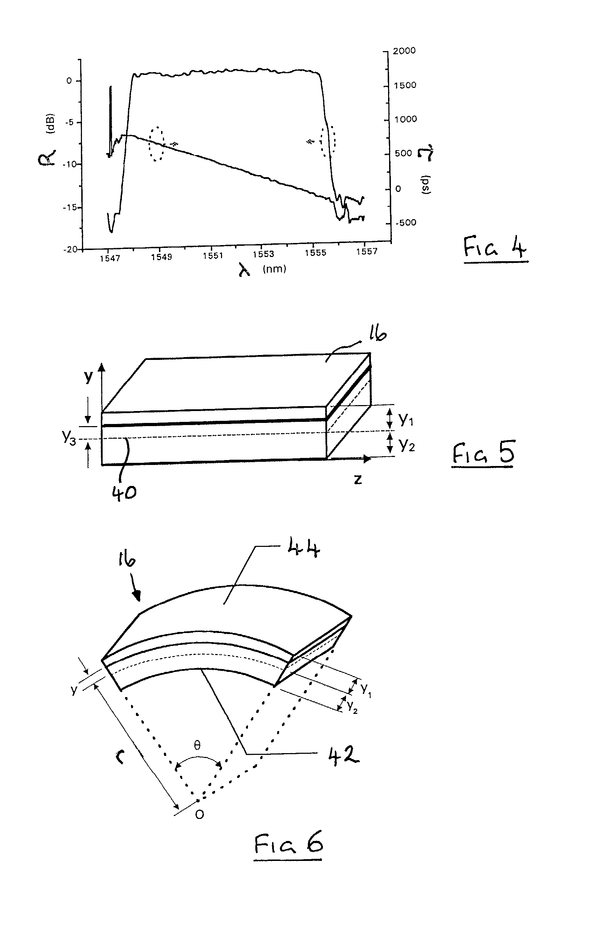

The FBG 12 has a spectral bandwidth of approximately 8 nm and its measured chromatic dispersion at 1550 nm is 128.3ps/nm. The grating 12 was fabricated by direct exposure to UV laser light using a phase mask. The phase mask used allows for writing a 10 cm long grating 12 with a chirp of 0.56nm/cm. The grating 12 was apodised to minimise the amplitude of any ripples present on its time delay curve. The reflection spectrum and the time delay curve of the grating 12 are shown in Figure 4.

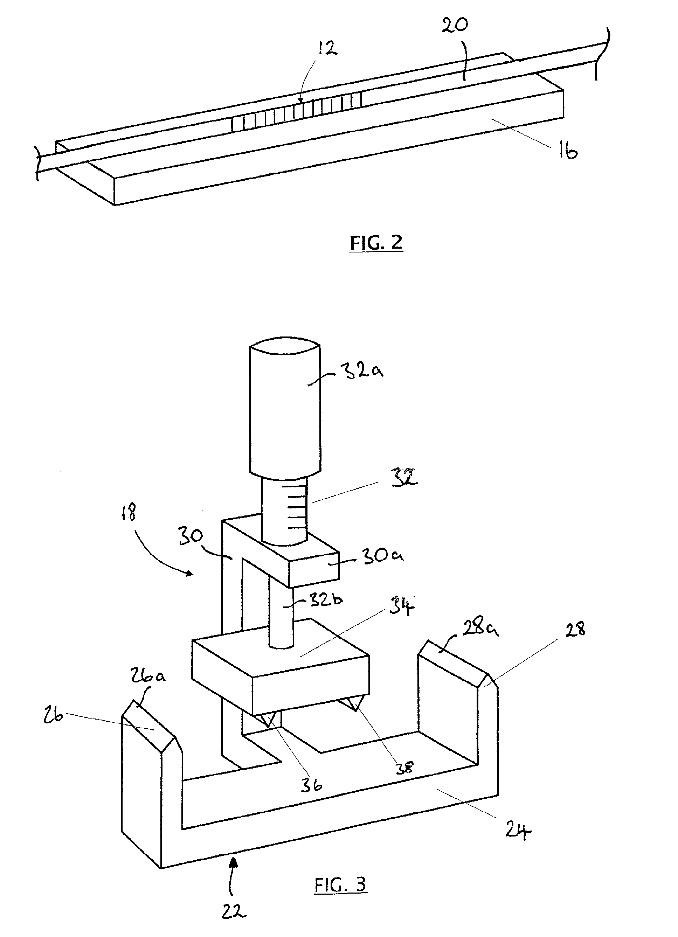

The bending apparatus 14 comprises a mechanical support, which in this example takes the form of a beam 16 of spring steel, shown in Figure 2, and a bending rig 18, shown in Figure 3. The beam 16 is 0.5 mm thick, 20 mm wide and 300 mm long, and has a longitudinally extending V-section groove (not shown) formed in one surface. The fibre 20 including the grating 12 is glued to the surface of the beam 16, within the groove. The groove helps to minimise the amount of non-axial force applied to the fibre 20 and hence the grating 12.

As shown in Figure 1, the beam 16 is directly coupled to the bending rig 18, which is operable to bend the beam 16, thereby bending the fibre 20 and the grating 12. The bending rig 18 comprises a frame member 22 having a base 24 at each end of which arms 24, 26 extend upwardly. Each arm 26, 28 is formed into a triangular-shaped contact wedge 26a, 28a at its free end, on which the beam 16 rests. The frame member 22 also comprises a generally U-shaped support member 30 provided generally at the centre of the base 24 and extending outwardly from one side of the base 24.

A micrometer driver 32 is mounted through the uppermost arm 30a of the support member 30 such that its manually operable knob 32a extends upwardly from the support member 30 and its extendable rod 32b extends downwardly from the support member 30, toward the base 24. A block 34 is carried by the extendable rod 32b. Two triangular-shaped contact wedges 36, 38 are symmetrically provided on the lowermost face of the block 34. The micrometer driver 32 is operable to move the block 34 moved up and down, away from and towards the base 24. Use of a micrometer driver 32 enables a tuneable non-uniform axial force, which in this example is strain, to be applied to the fibre 20 and thus to the grating 12.

Although in this example the micrometer driver 32 is operated manually, it could alternatively be driven by a motor, which may be under the control of a feedback loop based on, for example, bit-error-rate measurements.

The beam 16, plus the fibre 20 and the grating 12, is located on the contact wedges 26a, 28a of the arms 26, 28. The block 34 is then moved towards the base 24 and the beam 16, under the control of the micrometer driver 32, until the contact wedges 36, 38 on the block 34 come into contact with the beam 16. Further movement of the block towards the base 24 causes the beam 16 to become deformed. The originally straight beam 16 becomes curved. The curvature of the beam 16 increases under increasing movement of the block 34 towards the base 24. The deformation of the beam 16 is not permanent because the elastic limit of the spring steel is not exceeded. Therefore the beam 16 regains its original shape when the block 34 is removed from the beam 16.

Increasing the amount of bending applied to the beam 16 corresponds to a larger non-uniform axial strain being applied to the grating 12. The relative difference in the strain applied to different regions of the grating 12 stems from the geometric configuration of the bending rig 18. The region or regions of the grating 12 located nearest to an end of the beam 16 will be subjected to a first strain, while regions of the grating 12 located towards the centre of the beam 16 will be subjected to a second, larger, strain. The overall effect of this is that the period of the initially linearly chirped grating 12 becomes nonlinearly chirped. In addition, the curvature of the grating's time delay curve may be controlled by varying the magnitude of the applied strain.

The bending rig 18 provides a method of varying, in a predictable way, the amount of strain applied to the grating 12, by controlling the radius of curvature of the beam 16. The ability to control the amount of non-uniform axial strain applied to the grating 12 means that the period A of the grating 12 can be tuned in a very accurate way. When the periodicity of the grating 12 is changed, its time delay characteristics are altered as well. As a consequence, the dispersion characteristic of the grating 12 can be tuned by varying the amount of strain applied to the grating 12. This tuning of the dispersion characteristic of the grating 12 can by optimised by altering the positioning of the beam 16 on the bending rig frame 22, and in particular by altering the locations along the beam 16 at which the beam 16 is in contact with the contact wedges 26a, 28a of the arms 26, 28. This enables the maximum strain to be applied to a specific section of the beam 16, and thus a specific region of the grating 12. In this example, the beam 16 is located on the bending rig frame 22 such that the contact wedges 36, 38 of the block 34 are in contact with the beam 16 at a location corresponding to approximately one third of the length of the grating 12 in the short wavelength region of the grating 12. This means that the maximum amount of strain is applied around the 1550 nm region of the grating 12.

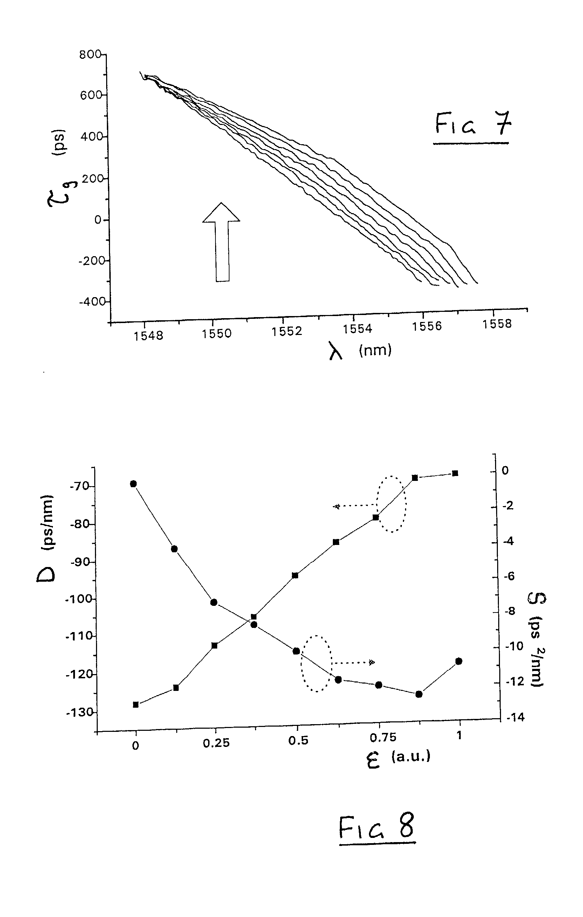

Referring to Figures 5 and 6, as first approximation, the amount of axial strain $\varepsilon_z(z)$ applied to the grating 12 is inversely proportional to the radius of curvature r of the beam 16. For a given value of r, the applied strain varies across the depth of the beam 16, as a function of distance y from the neutral surface 40. The neutral surface is the plane within the beam 16 which, when the beam 16 is bent, is neither strained nor compressed. The maximum amount of compression or strain occurs at the outside surfaces, 42, 44 respectively, of the beam where y takes its largest values. When r takes a different value in different regions of the grating 12, i.e. if r becomes a function of distance z along the grating 12, the applied strain is said to be non-uniform (distributed). In this case, the applied strain depends on the value that r takes locally.

In the hypothesis in which $\frac{d_\varepsilon}{d_z} << \frac{\varepsilon}{\Lambda_0}$, this mechanism enables the periodicity $\Lambda(z)$ of the grating to be varied in a predictable way:

$$\Lambda(z) = \Lambda_0(z)[1-\varepsilon_z(z)] \tag{Eq.1}$$

where $\Lambda_0(z)$ is the initial periodicity of the linearly chirped grating 12.

Neglecting any variations in refractive index of the fibre 20 due to variations in temperature and transversal strain, the refractive index of the fibre core can be expressed as

$$n_{core}(z) = n_0(z)+\delta n^\varepsilon(z)+\Delta n(z)\cos[2\pi z/\Lambda(z)] \tag{Eq.2}$$

where $n_0(z)$ is the unperturbed core refractive index and $\delta n^\varepsilon(z)$ is a perturbation caused by the elasto-optic effect, given by

$$\delta n^\varepsilon(z) = -\xi n_0(z)\varepsilon_z(z) \tag{Eq.3}$$

where $\xi$ is a constant that depends on the material properties of the optical fibre 20 ($\sim$0.2 for silica fibres). The tuning of the grating periodicity $\Lambda(z)$ and the refractive index variation n(z) induced by the applied strain produce a corresponding tuning of the local Bragg wavelength in the grating 12 which is given by:

$$\lambda_B(z) = 2\, n(z)\, \Lambda(z) = 2n_0\, \Lambda_0(z)[1 + \varepsilon^{opt}(z)] \tag{Eq.4}$$

where $\varepsilon^{opt}(z) = \varepsilon_z(z)+\delta n(z)/n_0 + \delta n^\varepsilon(z)/n_0$.

The core refractive index modification can be written as:

$$n(z)= n_0 + \Delta n(z)\cos\left[\frac{2\pi z}{\Lambda(z)}\left[1 - \varepsilon_z(z)\right]\right] - \xi\, n_0\, \varepsilon(z) \tag{Eq. 5}$$

where $\varepsilon_z(z)$ must be inhomogeneous in order to affect the time delay characteristic of the grating 12. If $\varepsilon_z(z)$ is homogeneous only a phase shift will be produced within the grating 12.

The changes in the local Bragg wavelength of the grating 12 will result in a corresponding modification in the group delay $\tau_g$ curve at a particular wavelength. The chromatic dispersion D obtained by differentiating the group delay curve with respect to wavelength is given by:

$$D_\lambda = \left.\frac{d\tau_g}{d\lambda}\right|_{\lambda_0} \tag{Eq. 6}$$

The mathematical description can be extended to any case in which the radius of curvature r of the beam 16 is a function of the axial coordinate z. In this example, the beam 16 is of constant thickness along its axial direction z. The amount of tuning which can be achieved may be increased by fabricating the beam 16 such that the thickness y of the beam 16, or the density of the beam 16, is function of longitudinal distance z along the beam 16.

Figure 7 shows experimental measurements of group delay of the grating 12 as a function of wavelength for 7 different magnitudes of applied non-uniform axial strain. The amount of applied strain increases from the bottom curve to the top curve, as indicated by the arrow. It can be seen that the curvature of the group delay increases with applied strain i.e. the slope of the curve (chromatic dispersion) changes under increasing applied non-uniform axial strain. That is to say, the group delay curve of the grating 12 displays a parabolic dependence of group delay on wavelength. This indicates that the grating 12 has a non-zero third order dispersion characteristic. The grating 12 can therefore compensate for chromatic dispersion (second order dispersion) and dispersion slope (third order dispersion) simultaneously.

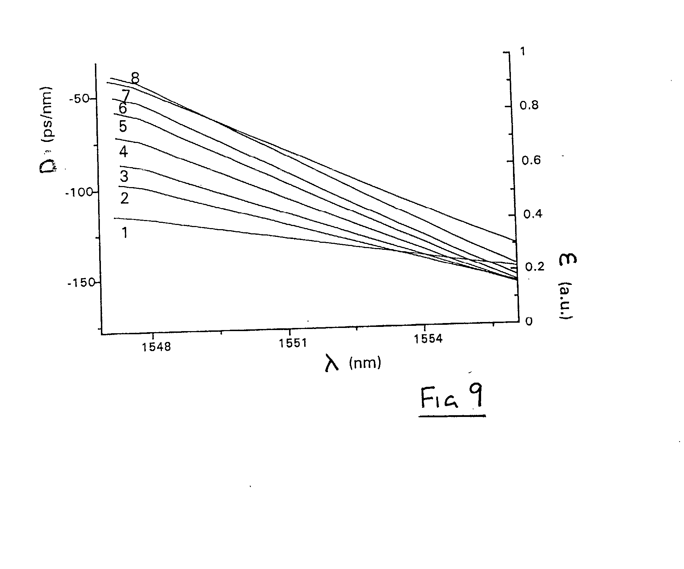

Figure 8 shows experimental measurements of the chromatic dispersion D and dispersion slope S of the grating 12 as a function of applied strain at a wavelength of 1550 nm. Figure 9 shows the amount of chromatic dispersion that the grating 12 can compensate for at wavelengths within the spectral range of the grating 12.

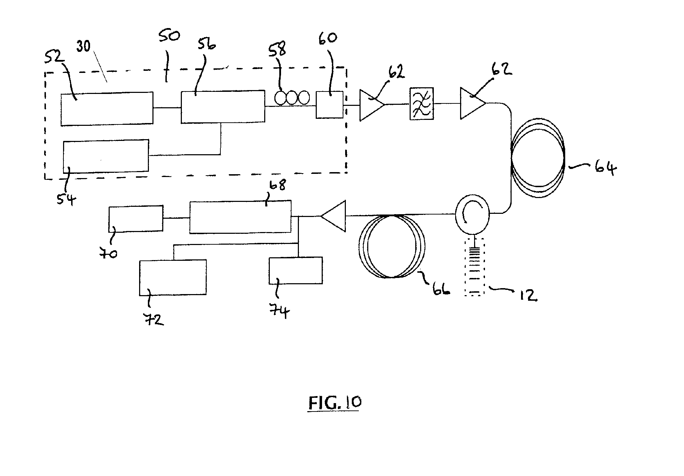

Referring to Figure 10, an experiment was undertaken in order to test the ability of the grating 12 to recompress a broad optical pulse under different values of applied non-uniform axial strain. The experimental configuration included an optical pulse source 50 to generate a 10 Gbit/s stream of optical pulses, each pulse being of 2.7 ps duration, at a wavelength of 1550 nm. The pulse source comprised a mode-locked fibre laser 52 (PriTel UOP-3), a pattern generator 54, an amplitude modulator 56, a polarisation controller 58 and a multiplexer 60. The time-bandwidth product of the pulses was $\sim$ 0.34 showing that the laser output pulses were a good approximation to being transform limited pulses having a $sech^2(t)$ profile. The pulse peak power was below the threshold power required for the generation of solitons.

The optical pulse stream generated by the pulse source 50 was amplified by an erbium doped fibre amplifiers (EDFA) 62 and then propagated through 4.4 km of standard mono-mode fibre (SMF) 64. SMF has a measured chromatic dispersion of $(16.1\pm0.7)$ps/nm-km (at 1550nm). The SMF 64 is used to provide a reference dispersion in these measurements. Due to dispersion produced by the EDFA 62, the pulses at the input to the reference SMF 64 are slightly broader than the pulses at the output of the source 50, and have a pulse width of 3.04ps. The anomalous dispersion of the SMF 64 broadens the pulses even further to $\sim$ 90ps.

The dispersion of the unstrained grating 12 is 128.3ps/nm, therefore the grating 12 overcompensates for the dispersion imposed on the pulse by the SMF 64. The detected pulse width at the output of the grating 12 was found to be $\sim$ 40ps. A variable dispersion delay line, in the form of a variable length of SMF 66, was used to compensate for the excess dispersion compensation provided by the grating 12, until maximum compression of the pulses to a pulse width of 3.6ps was achieved to enable the characteristic dispersion curve of the grating 12 to be measured. The pulse width was measured using an autocorrelator 68 and an oscilloscope 70, a sampled oscilloscope 72, and an optical spectrum analyser 74.

Because the pulses were not solitons, the recompression of the pulses was entirely due to the dispersion of the grating 12 and did not include any nonlinear effect.

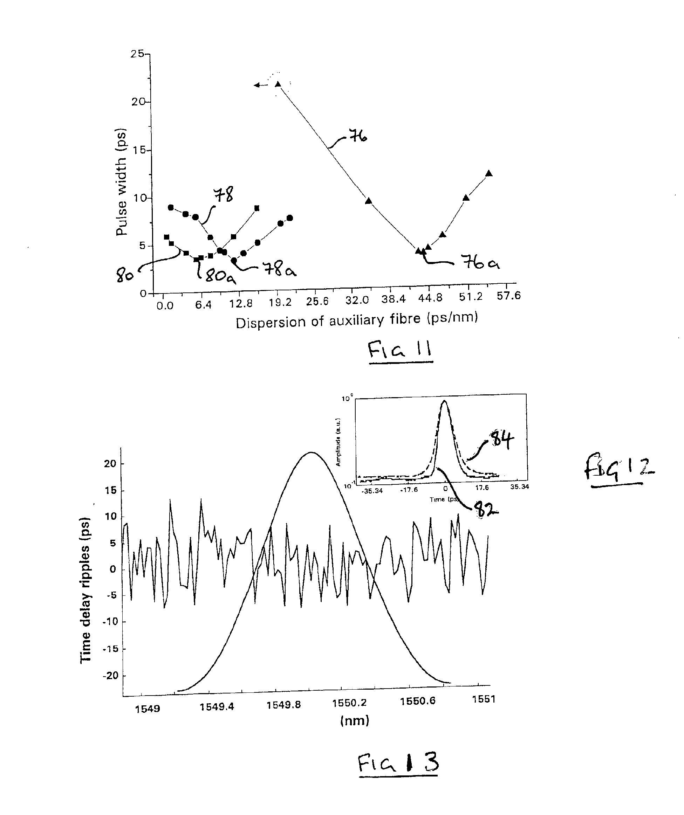

Figure 11 shows measurements of the final pulse width as a function of dispersion applied to the pulses by the SMF 64 for the grating 12 under no strain 76, and under two different applied strains 78, 80. The minimum optimised pulse width 76a, 78a, 80a obtained for the three different strains was approximately the same ($\sim$3.6ps). This indicates that the magnitude of the non-uniform axial strain applied to the grating 12 does not affect the pulse compression capabilities of the grating 12.

Figure 12 illustrates the profile 82 of the pulses at the output of the laser 52 and the profile 84 of the optimum pulses after recompression.

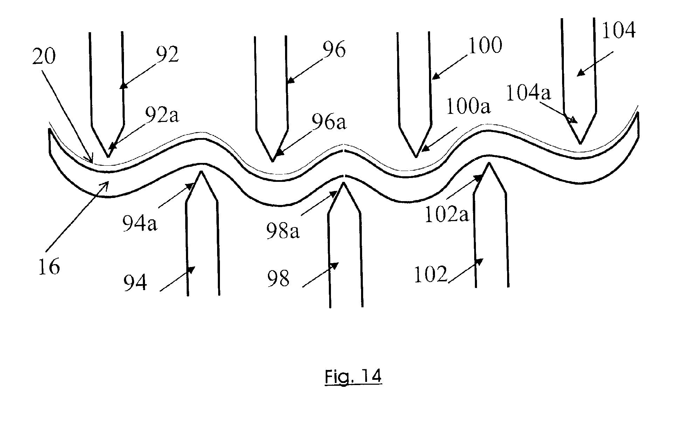

Referring to Figure 13, a measure of the time delay curve of the grating 12 under the three different applied strains showed that the difference in the amplitude of any ripples present on the curve between the case of maximum applied strain and no strain was less than 1ps. This is because the apodization procedure used during fabrication of the grating keeps the ripples in the group delay curve as low as possible. The measured average value for these ripples is $\pm$ 5ps in the wavelength region of interest around 1550 nm. The same experiment was performed using different pulse rates (10, 20 and 40 Gbits/s). The results (not shown) demonstrated that the recompression of the optical pulses is not affected by the pulse rate, and the device is therefore suitable for use with high bit-rate optical pulse streams.

Figure 14 shows part of an alternative dispersion compensation apparatus 90 according to the present invention. The same reference numbers are retained for corresponding features.

The section of optical fibre 20 containing the FBG 12 is attached to the steel beam 16 as described above. In this example the bending rig has seven arms 92, 94, 96, 98, 100, 102, 104. As before, each arm 92, 94, 96, 98, 100, 102, 104 is formed into a triangular shaped contact wedge 92a, 94a, 96a, 98a, 100a, 102a, 104a at its free end, which may be brought into contact with the beam 16. There are therefore seven contact points between the bending rig and the beam 16, allowing the beam 16, and thus the fibre 20 and FBG 12, to be bent into a significantly more complex shape than is achievable using the apparatus of Figure 1. The resulting non-uniform axial strain applied to the FBG 12 is consequently also significantly more complex, resulting in the periodicity of the FBG 12 being more complexly non-uniformly chirped.

The example described provides dispersion compensation apparatus based on the application of a non-uniform axial mechanical strain onto a linearly chirped FBG. The non-uniform axial strain is applied using a multi-point mechanical bending rig. The multii-point mechanical bending rig may have a different number of contact points than described, and the arrangement and separation of the contact points may also be different. Although the described embodiments have generally equally spaced contact points it will be understood that the contact points do not have to be equidistant from one another. In addition, the arms of the bending rig may be individually mounted, allowing a different force to be applied to the beam at each contact point if desired. It will however be appreciated by the skilled person that a different design of bending rig could be used instead, such as a cantilevered beam to which distributed loading is applied.

The described embodiment provides dispersion compensation apparatus in which the dispersion of a linearly chirped FBG may be altered, or tuned, by the application of a controllable degree of axial strain to the grating. By applying strain to the grating, the grating periodicity, and hence its time delay, becomes a non-linear function of axial position along the grating. The grating can therefore compensate simultaneously for second and third order dispersion. The dispersion of the grating may be tuned continuously over approximately 50ps/nm to 150ps/nm at an operating wavelength of 1550nm. The described invention therefore provides a tuneable dispersion compensator operable to compensate for the distortion suffered by optical pulse on propagating through an optical fibre due to the chromatic dispersion and dispersion slope of the fibre. The described embodiment provides the advantages of being relatively cheap, relatively easy to implement and of offering real time tuning of the amount of dispersion compensation provided by the grating. The described embodiment may be used as a tuneable dispersion compensator at the end of a dispersion managed transmission system, being able to respond to small variations in the amount of chromatic dispersion and dispersion slope to be compensated for.

Various modifications may be made without departing from the scope of the present invention. In particular it will be appreciated that a non-linearly chirped FBG may be used in place of the linearly chirped FBG described. In addition, different types of optical waveguide grating may be used, such as a planar waveguide grating. The skilled person will understand that a grating having a different spectral profile, including a different chirp and different wavelength, may be used in place of the grating described. A different bending rig may be used, which may have a different form of mechanical support, or may have a more or fewer contact points between the mechanical support and the bending rig frame. The mechanical support may be of different dimensions to those described, and may be fabricated from a different material. The fibre containing the grating may be coupled to the mechanical support in a different manner to that described.

## Claims

1. A dispersion compensation apparatus comprising:

   a chirped optical waveguide grating; and,
   means operable to induce an axially non-uniform change in the periodicity of at least part of the grating, to thereby modify one or more dispersion characteristics of the grating.

2. An apparatus according to claim 1, wherein the chirped optical waveguide grating is a chirped fibre grating, such as a chirped fibre Bragg grating.

3. An apparatus according to claim 1 or 2, wherein the said means is operable to simultaneously modify the chromatic dispersion characteristic and one or more higher order dispersion characteristics of the grating, such as the dispersion slope characteristic of the grating.

4. An apparatus according to any preceding claim, wherein the said means comprises apparatus for applying a non-uniform axial force to at least part of the grating, the non-uniform axial force comprising a combination of bending forces and strain or compression.

5. An apparatus according to claim 4, wherein the apparatus is operable to mechanically alter the configuration of the grating.

6. An apparatus according to claim 5, wherein the apparatus comprises bending apparatus operable to bend the grating by applying a load at one or more points, to thereby alter the radius of curvature of the grating.

7. An apparatus according to claim 6, wherein the radius of curvature of the grating is a function of axial distance along the length of the grating.

8. An apparatus according to claim 6 or 7, wherein the bending apparatus comprises a mechanical support to which the grating is coupled and a bending rig to which the mechanical support is coupled, the bending rig being operable to bend the mechanical support, thereby bending the grating.

**9.** An apparatus according to claim 8, wherein the thickness and/or density and/or composition of the mechanical support varies across the mechanical support.

**10.** An apparatus according to claim 8 or 9, wherein the bending rig comprises a multipoint bending rig, the mechanical support being coupled to the multipoint bending rig at a plurality of points such that a load may be applied to the mechanical support at a plurality of points.

**11.** A dispersion compensation apparatus comprising:

a chirped optical waveguide grating; and,
a strain loading apparatus operable to induce an axially non-uniform change in the periodicity of at least part of the grating, to thereby modify the dispersion characteristics of the grating.

**12.** A method of controlling the amount of dispersion compensation applied to an optical signal, the method comprising coupling an optical signal to be dispersion compensated to a dispersion compensation apparatus according to any preceding claim.

**13.** A method of controlling the amount of dispersion compensation applied to an optical signal comprising the steps of coupling the optical signal to a chirped optical waveguide grating and applying an axially non-uniform change in the periodicity of at least part of the grating to tune the dispersion characteristics of the grating.

**14.** A method according to claim 13, in which the grating is mechanically disturbed to change the configuration of the grating.

**15.** A method according to claim 13 or 14, in which the grating is bent to change the configuration of the grating.

Fig 1

FIG. 2

FIG. 3

Fig 4

Fig 5

Fig 6

Fig 7

Fig 8

Fig 9

**FIG. 10**

Fig 11

fig 12

Fig 13

Fig. 14

EP 1 298 466 A1

| | **European Patent Office** | **EUROPEAN SEARCH REPORT** | **Application Number** EP 01 30 8203 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | IMAI T ET AL: "DISPERSION TUNING OF A LINEARLY CHIRPED FIBER BRAGG GRATING WITHOUT A CENTER WAVELENGTH SHIFT BY APPLYING A STRAIN GRADIENT" IEEE PHOTONICS TECHNOLOGY LETTERS, IEEE INC. NEW YORK, US, vol. 10, no. 6, June 1998 (1998-06), pages 845-847, XP000783517 ISSN: 1041-1135 * the whole document * | 1-15 | G02B6/34 H04B10/18 |
| X | OHN M M ET AL: "Dispersion variable fibre Bragg grating using a piezoelectric stack" ELECTRONICS LETTERS, IEE STEVENAGE, GB, vol. 32, no. 21, 10 October 1996 (1996-10-10), pages 2000-2001, XP006005830 ISSN: 0013-5194 * the whole document * | 1-3, 11-14 | |
| A | EP 1 081 881 A (NORTEL NETWORKS LTD) 7 March 2001 (2001-03-07) * claim 1; figure 1 * | 3 | TECHNICAL FIELDS SEARCHED (Int.Cl.7) G02B H04B |
| A | LE BLANC M ET AL: "Tunable chirping of a fibre Bragg grating using a tapered cantilever beam" ELECTRONICS LETTERS, IEE STEVENAGE, GB, vol. 30, no. 25, 8 December 1994 (1994-12-08), pages 2163-2165, XP006001467 ISSN: 0013-5194 * the whole document * | 9 | |
| A | US 5 694 501 A (LEBLANC MICHAEL J ET AL) 2 December 1997 (1997-12-02) * column 1, line 47 - column 2, line 58; figures 4,5 * | 1,9, 11-13 | |

The present search report has been drawn up for all claims

| Place of search | Date of completion of the search | Examiner |
|---|---|---|
| MUNICH | 15 November 2001 | Lord, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 30 8203

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2001

| Patent document cited in search report | | Publication date | Patent family member(s) | | Publication date |
|---|---|---|---|---|---|
| EP 1081881 | A | 07-03-2001 | EP | 1081881 A2 | 07-03-2001 |
| US 5694501 | A | 02-12-1997 | CA | 2134958 A1 | 03-05-1996 |

For more details about this annex : see Official Journal of the European Patent Office, No. 12/82